# EUROPÄISCHE PATENTSCHRIFT

(11) **EP 0 354 939 B1**
(45) Veröffentlichungstag und Bekanntmachung des Hinweises auf die Patenterteilung: **23.03.1994**
(21) Anmeldenummer: 89901055.7
(22) Anmeldetag: 13.01.1989
(51) Int. Cl.: G09B 15/04

(54) **LEITER ALS UNTERRICHTSHILFE ZUR VERANSCHAULICHUNG DER TONSYSTEME (RELATIV UND ABSOLUT) ZUSAMMEN MIT KLANGBAUSTEINEN**
LADDER AND TONAL COMPONENTS USEFUL AS A TEACHING AID FOR REPRESENTING THE TONAL SYSTEMS (RELATIVE AND ABSOLUTE)
ECHELLE SERVANT D'AIDE D'ENSEIGNEMENT POUR VISUALISER LES SYSTEMES TONALS (RELATIFS ET ABSOLUS) ET ELEMENTS TONALS COOPERANTS

(30) Priorität: 30.01.1988 CH 312/88
(43) Veröffentlichungstag der Anmeldung: 21.02.1990
(73) Patentinhaber: WIESINGER, Gertrud, CH-7324 Vilters (CH)
(72) Erfinder: WIESINGER, Gertrud, CH-7324 Vilters (CH)
(74) Vertreter: Feldmann, Clarence Paul
(86) Internationale Anmeldenummer: CH8900010
(87) Internationale Veröffentlichungsnummer: WO8907306

(56) Entgegenhaltungen:
- CH-A- 616 016
- DE-C- 258 410
- DE-C- 536 857

## Beschreibung

Die vorliegende Erfindung betrifft eine Unterrichtshilfe zur Veranschaulichung der Tonsysteme in dreidimensionaler Darstellung, bestehend aus Stützen und horizontalen Trägern.

Unterrichtshilfen der eingangs genannten Art sind aus der DE-C-53'68'57 bekannt. Hierbei handelt es sich jedoch um eine Unterrichtshilfe, die es dem Lehrer erspart, immer wieder ändernde Tonleitern, Harmonien und Tonwerte aufzeichnen zu müssen. Durch die hier beschriebene Lehrhilfe kann er entsprechend der Notenschrift räumlich diese Zusammenhänge darstellen.
Den Bedürfnissen der Kinder im Vorschul- oder frühen Schulalter werden diese Hilfsmittel nicht gerecht. Sie verbleiben in der nicht erlebbaren Theorie behaftet.

Auch ein Lehrmittel gemäss der DE-C-25'84'10 behebt dieses Problem nicht. Hier ist ein Rahmen über einen Resonanzkasten angeordnet. In einen Spalt zwischen diesen Elementen lässt sich eine Tonleiterabbildung einschieben und auf den Rahmen fixierbare Klangkörper, ähnlich einem Xyolophon lassen sich akustisch wahrnehmen. Auch dieses Lehrmittel bleibt für das Kind in reiner, nicht erfassbarer Theorie behaftet.

Die Erfindung hat sich folglich zur Aufgabe gestellt, eine kindgerechte Unterrichtshilfe zu schaffen, welche im Spiel physisch und akustisch erlebbar ist.

Diese Aufgabe löst eine Unterrichtshilfe mit den Merkmalen des Patentanspruches 1.

Eine solche leiterförmig Unterrichtshilfe erlaubt einem Kind, die Tonhöhen zu erleben, die Unregelmässigkeiten der Tonleiter durch die unterschiedlichen Distanzen der Klangelementträger physisch zu spüren und in Verbindung mit der Betätigung von Klangkörpern das physisch Erlebte mit einem akustisch wahrnehmbaren Erlebnis zu einem erfassbaren Ganzen zu vereinen.
Die Einrichtung von Tonleitern, Dreiklängen und Intervallen erfolgt im Bezug auf die Tonika-Do-Methode. Es können mit dieser als Anstellleiter realisierten Unterrichtshilfe auf eindrückliche Weise alle Tonsysteme dargestellt werden.

Die Figuren zeigen ein Ausführungsbeispiel der Erfindung:
- Figur 1: Vorderansicht des Grundelementes der Unterrichtshilfe;
- Figur 2: Seitenansicht eines Holmes;
- Figur 3: Grundriss eines Klangelementträgers;
- Figur 4: ein Klangbaustein;
- Figur 5: perspektivische Ansicht der Unterrichtshilfe mit aufgelegtem Klangbaustein.

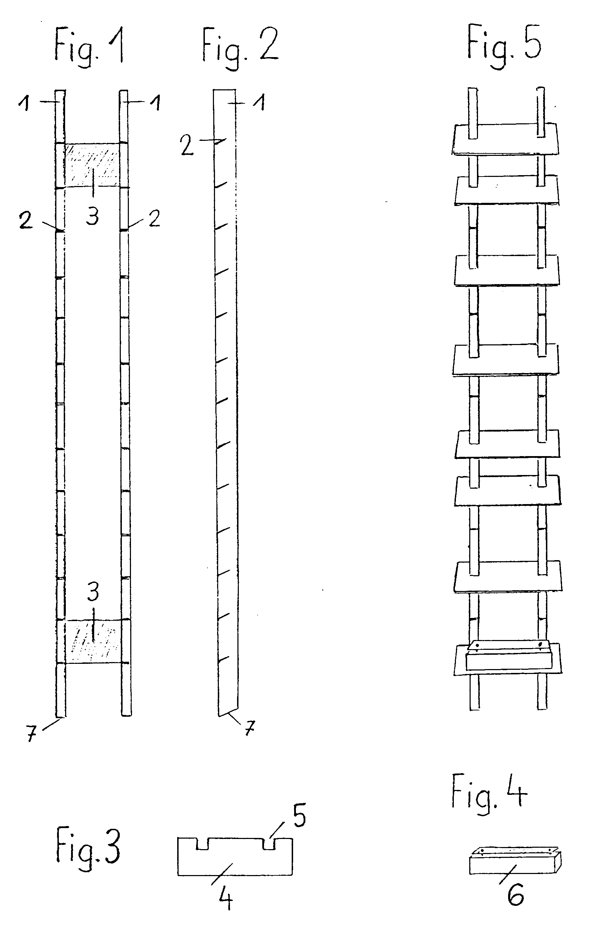

Im Grundaufbau besteht die Unterrichtshilfe aus zwei Holmen 1, die unten entsprechend einem Anstellwinkel schräg abgeschnitten sind. Jeder Holm 1 ist mit dreizehn Einschnitten 2 versehen. Die Einschnitte 2 sind mit der gleichen Neigung versehen wie die Standflächen 7 der Holme. Die beiden Holme 1 sind unten und oben mittels je einem Verbindungselement 3, beispielsweise in Form von mit den Holmen verleimten Brettchen, fest in einem vorgegebenen Abstand parallel zueinander zusammengehalten.
Auf den beiden Holmen 1 sind in die Einschnitte 2 nun Klangelementräger 4 einsteckbar, die die verschiedenen Tonhöhen auch optisch repräsentieren. Dabei stellt die Distanz zwischen zwei Einschnitten den Tonhöhenunterschied zwischen einem Halbton und dem benachbarten Ganzton dar. So lassen sich auf den beiden Holmen 1 mittels den Klangelementrägern 4 oder Tonelementträgern die verschiedenen Tonleitern der unterschiedlichen Tonarten erleb- und erkennbar machen. So ersieht man sofort, dass die Leiter gemäss Figur 5 eine Dur-Tonleiter darstellt.
Die Klangelementräger 4 aus Holz oder einem ähnlichen Material haben jeweils zwei Aussparungen 5 im Abstand der beiden Holme 1. Weil die Einschnitte 2 geneigt sind, verlaufen die Klangelementträger 4 horizontal, wenn die Holme 1 im vorgegebenen Winkel angelehnt sind. Somit kann man nun auf jeden Träger 4 den entsprechenden Klangbaustein 6 legen. Diese Klangbausteine sind im Fachhandel erhältlich. Damit lässt sich die visualisierte Tonleiter auch akustisch erlebbar machen.
Schliesslich können die Klangelementräger auch noch mit Bezeichnungen, wie beispielsweise arabischen Zahlen oder Tonika-Do-Silben, gekennzeichnet sein oder farblich unterschiedlich gestaltet werden.

## Patentansprüche

1. Unterrichtshilfe zur veranschaulichung der Tonsysteme in dreidimensionaler Darstellung, bestehend aus Stützen und horizontalen Trägern, dadurch gekennzeichnet, dass die vertikalen Stützen die Holme (1) einer Anstellleiter mit geneigten Standflächen (7) sind, die durch Verbindungselemente (3) fixiert zueinander gehalten sind und je dreizehn parallel zur Standfläche (7) verlaufende Einschnitte (2) in gleichmässigen Abständen zueinander aufweisen, in die Tonelementträger (4) einschiebbar gehalten sind, derart, dass auf jedem Träger (4) ein entsprechender Klangbaustein (6) auflegbar ist, wobei die Unterrichtshilfe ferner zur Auflage auf die Tonelementträger (4) dienende Klangbausteine (6) umfasst.

## Claims

1. A teaching aid for demonstrating the tonal systems in three-dimensional representation, comprising posts and horizontal supports, characterized in that the vertical posts are side bars (1) of a ladder for leaning against a wall, standing on oblique lower ends (7), said side bars being firmly joined by links (3) and each provided with thirteen equidistant incisions (2) inclined at the same angle as the oblique lower ends of the side bars, and support pieces (4) for sound elements being insertable in said incisions, in such a way that a sound-element (6) can be laid upon each of said support pieces, the teaching aid comprising furthermore sound-elements (6) to be laid upon said support pieces (4).

## Revendications

1. Aide à l'enseignement pour visualiser les systèmes tonals en trois dimensions, composée d'éléments de soutien et de supports horizontaux, caractérisée en ce que les éléments de soutien verticaux sont les montants (1) d'une échelle avec des surfaces d'appui (7) inclinées qui sont fixées les unes aux autres par des éléments de liaison (3) et qui présentent chacun treize entailles (2) à égale distance les unes des autres s'étendant parallèlement à la surface d'appui (7), dans lesquelles peuvent être insérés les supports de tonalités (4) de manière à ce qu'un ton (6) correspondant puisse être placé sur chaque support (4), sachant que l'aide à l'enseignement comprend en outre des tons (6) destinés à être placés sur les supports de tonalités (4).
